# EUROPEAN PATENT APPLICATION

(11) **EP 4 823 106 A1**
(43) Date of publication of application: **14.10.2026**
(21) Application number: 25825588.4
(22) Date of filing: 19.06.2025
(51) Int. Cl.: H04N 23/61, H04N 23/611

(54) **PHOTOGRAPHING METHOD AND APPARATUS, AND COMPUTER-READABLE MEDIUM AND ELECTRONIC DEVICE**

(30) Priority: 25.06.2024 CN 202410828745
(71) Applicant: Godox Photo Equipment Co., Ltd., Shenzhen, Guangdong 518000 (CN)
(72) Inventor: ZENG, Weijun, Baoan District Shenzhen, Guangdong 518000 (CN)
(74) Representative: Studio Torta S.p.A.
(86) International application number: PCT/CN2025/102046
(87) International publication number: WO 2026/001819

(57) **Abstract**

A photographing method and apparatus, and a computer-readable medium and an electronic device are disclosed. The method includes: determining the type of a target photographing control subject having an association relationship with a target object to be photographed, the target photographing control subject being used for controlling a photographing operation of a camera; acquiring imaging information of the target photographing control subject, and generating a photographing control signal on the basis of the imaging information and the type of the target photographing control subject; and executing a corresponding photographing operation on the target object on the basis of the photographing control signal.

## Description

### CROSS-REFERENCE TO RELATED APPLICATIONS

This disclosure claims priority to Chinese patent application No. 202410828745.0, filed on June 25, 2024, and entitled "Photographing Method and Apparatus, and Computer-readable Medium and Electronic Device," the entire contents of which are incorporated herein by reference in their entirety.

### TECHNICAL FIELD

This disclosure belongs to the field of camera technology, and specifically relates to a photographing method, apparatus, computer-readable medium, and electronic device.

### BACKGROUND

Photographing allows transient events to form long-term records, and it has become a necessary operation in people's daily life and work. Generally speaking, compared with camera modules integrated into terminal devices (such as mobile phones), a dedicated camera for photographing can achieve better shooting results, and thus cameras are more popular among professionals.

Taking a smart camera such as an instant camera as an example, it integrates the functions of taking a photo and printing in a single camera device, and can complete the printing of a photo instantly. However, at present, the photographing operation of such smart cameras limits the usage scenarios of the camera. For example, when taking a photo, the user needs to hold the camera to aim at the object to be photographed, and then press the shutter button on the camera to take the photo.

### SUMMARY

One purpose of this disclosure is to provide a photographing method, apparatus, computer-readable medium, and electronic device.

Other features and advantages of this disclosure will become apparent from the following detailed description, or may be partially learned through practice of this disclosure.

According to one aspect of the embodiments of this disclosure, a photographing method is provided, including:
determining a type of a target shooting control subject that has an associated relationship with a target object to be photographed, where the target shooting control subject is used to control a photographing operation of a camera;
acquiring imaging information of the target shooting control subject, and generating a shooting control signal based on the imaging information and the type of the target shooting control subject;
performing a corresponding photographing operation on the target object according to the shooting control signal.

According to one aspect of the embodiments of this disclosure, a photographing apparatus is provided, including:
a type determination module configured to determine a type of a target shooting control subject that has an associated relationship with a target object to be photographed, where the target shooting control subject is used to control a photographing operation of a camera;
a signal generation module configured to acquire imaging information of the target shooting control subject, and generate a shooting control signal based on the imaging information and the type of the target shooting control subject;
a photographing module configured to control the camera to execute a photographing operation according to the target shooting control subject and the target object.

In one embodiment of this disclosure, the type determination module is specifically configured to:
acquire video stream data collected by the camera for the target object;
determine a type of the target object to be photographed according to the video stream data;
determine the type of the target shooting control subject according to the type of the target object and a preset object-subject mapping relationship; the preset object-subject mapping relationship indicates a mapping relationship between photographing object types and shooting control subject types.

In one embodiment of this disclosure, the type determination module is specifically configured to:
determine the type of the target shooting control subject that has an associated relationship with the target object to be photographed according to a photographing mode selected by a user; the photographing mode at least includes a single-gesture photographing mode, a multi-gesture photographing mode, a dynamic gesture photographing mode, a predefined gesture photographing mode, a marker tracking and photographing mode, and a face recognition and tracking photographing mode.

In one embodiment of this disclosure, the type determination module is specifically configured to:
acquire face image data within a framing range of the camera;
perform facial feature extraction on the face image data to obtain facial feature information to be recognized;
if the facial feature information to be recognized is consistent with pre-stored facial feature information, then take the object corresponding to the facial feature information to be recognized as the target object, and determine the type of the target shooting control subject that has an associated relationship with the target object.

In one embodiment of this disclosure, the signal generation module is specifically configured to:
determine a corresponding subject recognition algorithm according to the type of the target shooting control subject; the subject recognition algorithm at least includes one of a gesture recognition algorithm, a face recognition algorithm, and a marker recognition algorithm, or any combination thereof;
when the subject recognition algorithm recognizes that the target shooting control subject in the imaging information is a designated shooting control subject, generate the shooting control signal.

In one embodiment of this disclosure, the signal generation module is specifically configured to:
use the subject recognition algorithm to recognize a designated area in the imaging information to determine the target shooting control subject included in the imaging information; where a distance between a boundary of the designated area and an image contour of the target object is less than a first preset distance, or a distance between the boundary of the designated area and a contour of a specified part of the target object is less than a second preset distance.

In one embodiment of this disclosure, the type of the target shooting control subject is a gesture. The type determination module is specifically configured to:
perform face recognition on the target object to record an area where a face of the target object is located;
when the target shooting control subject is recognized according to the imaging information, detect a distance between a position of the target shooting control subject and the area where the face is located;
when the distance is within a preset range, generate the shooting control signal.

In one embodiment of this disclosure, the type of the target shooting control subject is a marker. The type determination module is specifically configured to:
when the target shooting control subject is detected according to the imaging information, establish a wireless connection with a wireless signal transmission module of the target shooting control subject;
acquire, via the wireless connection, the shooting control signal sent by the target shooting control subject.

In one embodiment of this disclosure, the type of the target shooting control subject is a gesture. The signal generation module is specifically configured to:
detect a first gesture motion performed by the target object according to the imaging information;
when it is detected that the target object performs a second gesture motion within a preset time duration after the first gesture motion is detected, generate the shooting control signal.

In one embodiment of this disclosure, there are multiple target objects. The signal generation module is specifically configured to:
recognize multiple target shooting control subjects according to the imaging information and the type of the target shooting control subject;
calculate a ratio between the number of control subjects and the number of target objects;
when the ratio is greater than a preset threshold, generate the shooting control signal.

In one embodiment of this disclosure, the shooting control signal includes a focusing instruction and a shooting instruction. The photographing module is specifically configured to:
after executing a focusing operation on the target object according to the focusing instruction, execute a corresponding photographing operation on the target object according to the shooting instruction.

In one embodiment of this disclosure, there are multiple target objects. The photographing module is specifically configured to:
according to the generation time of the shooting control signal corresponding to each target object, sequentially focus on each target object and then execute the photographing operation; or
after focusing on each target object separately, execute a photographing operation on the multiple target objects as a whole.

In one embodiment of this disclosure, the photographing module is further configured to:
when a stop shooting gesture is detected, control the camera to stop shooting.

In one embodiment of this disclosure, the photographing module is further configured to:
when it is detected that the target object moves, generate a lens movement instruction according to a movement path of the target object;
control the lens of the camera to move according to the lens movement instruction, so that the target object remains within a framing range of the camera during the photographing process.

According to one aspect of the embodiments of this disclosure, a computer-readable medium is provided, having a computer program stored thereon, wherein the computer program, when executed by a processor, implements the photographing method as described in the above technical solutions.

According to one aspect of the embodiments of this disclosure, an electronic device is provided, the electronic device including: a processor; and a memory configured to store executable instructions of the processor. The processor executes the executable instructions to cause the electronic device to execute the photographing method as described in the above technical solutions.

According to one aspect of the embodiments of this disclosure, a computer program product or a computer program is provided, the computer program product or the computer program containing computer instructions stored in a computer-readable storage medium. A processor of a computer device reads the computer instructions from the computer-readable storage medium, and the processor executes the computer instructions, causing the computer device to execute the photographing method as described in the above technical solutions.

In the technical solutions provided in the embodiments of this disclosure, first, a type of a target shooting control subject that has an associated relationship with a target object to be photographed is determined, where the target shooting control subject is used to control a photographing operation of a camera. Then, imaging information of the target shooting control subject is acquired, and a shooting control signal is generated according to the imaging information and the type of the target shooting control subject. Finally, a corresponding photographing operation is executed on the target object according to the shooting control signal. Thus, the camera can realize automatic photographing based on the target object to be photographed and the target shooting control subject, without requiring the user to manually operate the camera to shoot, thereby allowing the user to use the camera for photographing in more scenarios, expanding the usage scenarios of the camera, and improving the user experience.

It should be understood that the above general description and the following detailed description are merely exemplary and explanatory, and are not intended to limit this disclosure.

### BRIEF DESCRIPTION OF DRAWINGS

The accompanying drawings herein are incorporated into and constitute a part of this specification, illustrate embodiments consistent with this disclosure, and together with the description serve to explain the principles of this disclosure. Apparently, the drawings in the following description are only some embodiments of this disclosure, and for those of ordinary skill in the art, other drawings can be obtained based on these drawings without creative efforts.
Fig. 1 schematically shows a flowchart of a photographing method provided by one embodiment of this disclosure.
Fig. 2 schematically shows a flowchart of a photographing method provided by one embodiment of this disclosure.
Fig. 3 schematically shows a block diagram of a photographing apparatus provided by an embodiment of this disclosure.
Fig. 4 schematically shows a block diagram of a computer system suitable for implementing an electronic device according to an embodiment of this disclosure.

### DETAILED DESCRIPTION OF EMBODIMENTS

Example embodiments will now be described more fully with reference to the accompanying drawings. However, the example embodiments may be implemented in various forms and should not be construed as limited to the examples set forth herein. On the contrary, these embodiments are provided so that this disclosure will be more comprehensive and complete, and will fully convey the concept of the example embodiments to those skilled in the art.

Furthermore, the described features, structures, or characteristics may be combined in any suitable manner in one or more embodiments. In the following description, numerous specific details are provided to give a thorough understanding of the embodiments of this disclosure. However, those skilled in the art will appreciate that the technical solutions of this disclosure may be practiced without one or more of the specific details, or other methods, components, apparatuses, steps, etc. may be used. In other instances, well-known methods, apparatuses, implementations, or operations are not shown or described in detail to avoid obscuring aspects of this disclosure.

The block diagrams shown in the drawings are merely functional entities and do not necessarily correspond to physically independent entities. That is, these functional entities may be implemented in software, or implemented in one or more hardware modules or integrated circuits, or implemented in different networks and/or processor devices and/or microcontroller devices.

The flowcharts shown in the drawings are merely illustrative, and do not necessarily include all the contents and operations/steps, nor must they be executed in the order described. For example, some operations/steps may be further decomposed, while some operations/steps may be combined or partially combined, so the actual execution order may change according to the actual situation.

In the embodiments of this disclosure, the term "module" or "unit" refers to a computer program or a part of a computer program having predetermined functions, and works together with other related parts to achieve predetermined goals, and may be implemented in whole or in part by using software, hardware (such as processing circuits or memory), or a combination thereof. Similarly, one processor (or multiple processors or memories) may be used to implement one or more modules or units. Furthermore, each module or unit may be part of an overall module or unit that includes the functionality of that module or unit.

When using a camera to take a photo, the user needs to hold the camera to aim at the object to be photographed, and then press the shutter button on the camera to take the photo. This results in the user performing the photo taking operation not being captured by the camera, and also means the camera must be carried by the user, and the user cannot perform the photographing operation without the camera, thereby limiting the usage scenarios of the camera. Based on the foregoing problems, this disclosure proposes a photographing method. The photographing method provided by this disclosure is described in detail below with reference to specific embodiments.

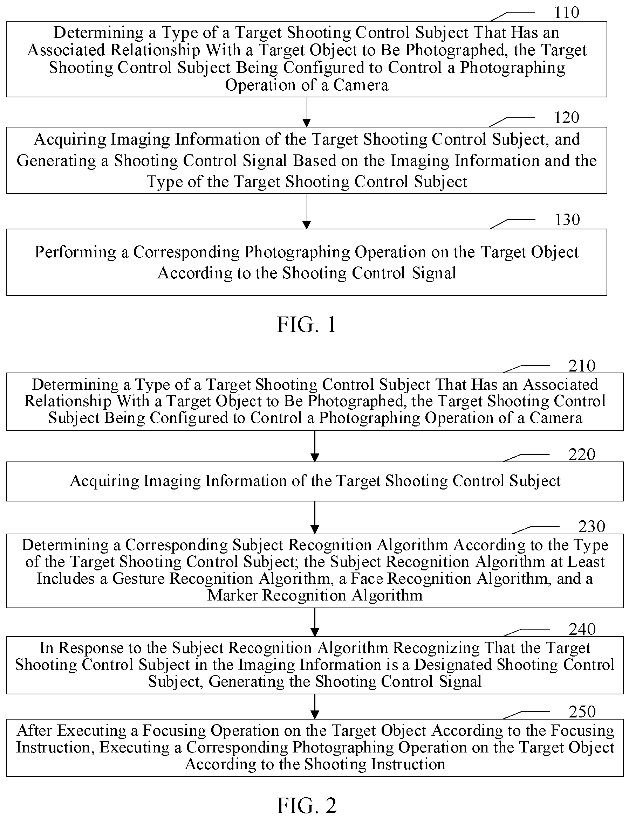

Fig. 1 schematically shows a flowchart of a photographing method provided by one embodiment of this disclosure, and the method may be implemented by a camera, such as an instant camera. As shown in Fig. 1, the photographing method provided by this embodiment includes steps 110 to 130, which are specifically as follows:
Step 110: Determine a type of a target shooting control subject that has an associated relationship with a target object to be photographed, where the target shooting control subject is used to control a photographing operation of a camera.

Specifically, the target object is the photographing object of the camera, which can be any object that can be recorded by the camera, such as a person, an animal, a device, etc. The target shooting control subject is an object used to control the photographing operation of the camera, and has multiple types. For example, the types of the target shooting control subject include a person's body posture, facial expression, gesture, worn marker, etc., and may also be markers on other animals or items, such as animal nameplates, license plates, etc.

In one embodiment of this disclosure, the user may store multiple pieces of facial feature information in the camera in advance. For example, the user uses the camera to photograph a designated person, and the camera performs face recognition on the captured image to obtain facial feature information and stores it. Or, the user imports a face image of a designated person into the camera, and the camera performs face recognition on that image to obtain facial feature information and stores it. The facial feature information can be used to distinguish different people. When photographing, the camera acquires face image data within the framing range, recognizes the face image data, and extracts facial feature information to be recognized. The facial feature information to be recognized is then compared with the pre-stored facial feature information. If they are consistent, the person corresponding to the facial feature information to be recognized is taken as the target object. If they are inconsistent, the corresponding person is not taken as the target object. This can accurately confirm the target object to be photographed and exclude interference from other non-photography-related persons in the environment.

In one embodiment of this disclosure, the type of the target shooting control subject may be determined according to a photographing mode set by the user on the camera, i.e., the type of the target shooting control subject that has an associated relationship with the target object to be photographed is determined according to the photographing mode selected by the user. The photographing mode defines the type of subject that triggers the photographing operation, i.e., defines the type of the target shooting control subject. For example, the photographing mode may include a single-gesture photographing mode, a multi-gesture photographing mode, a dynamic gesture photographing mode, a predefined gesture photographing mode, a marker tracking and photographing mode, and a face recognition and tracking photographing mode, and may also include other types of photographing modes based on user requirements or design requirements. The single-gesture photographing mode refers to a mode in which a photographing operation is triggered by a single gesture motion, such as making a "V" shape with one hand. The multi-gesture photographing mode refers to a mode in which a photographing operation is triggered by multiple gesture motions, such as making a "V" shape with both hands. The dynamic gesture photographing mode refers to a mode in which a photographing operation is triggered by changing gesture motions, such as changing from gesturing the number 1 to gesturing the number 2. The predefined gesture photographing mode refers to a mode in which the user pre-sets relevant gesture motions or the camera prestores relevant gesture motions, and the photographing operation is triggered when the user subsequently performs the gesture motion. The marker tracking and photographing mode refers to triggering the photographing operation through a specific marker, which may also be called a logo tracking and photographing mode, such as animal engraved plates, license plates, specific markers worn by people, etc. As an example, the specific marker may be a corporate logo or related pattern on a corporate culture shirt, or an engraved plate or marker badge worn on clothing. The face recognition and tracking photographing mode refers to triggering the photographing operation by recognizing a face. The above modes of triggering the photographing operation through various gestures may be collectively referred to as gesture photographing modes. Then, according to the above several photographing modes, it can be determined that the type of the target shooting control subject can be a gesture, a face, a marker, etc.

As a further specific example, in the logo tracking and photographing mode, the engraved plate or marker plate may also be integrated with a wireless signal transmission module, which has a shooting control signal transmission function and can connect to a network or pair with the camera. When the camera recognizes the corresponding logo within the framing range, it can initiate network connection or pairing, perform automatic networking or pairing with the wireless transmission module of the marker plate, and then the camera enters a wireless control photographing mode. The user can output a shooting control signal by operating on the marker plate, and the shooting control signal is transmitted wirelessly to the camera side, and the camera executes a video recording or photo taking function.

In one embodiment of this disclosure, the type of the target shooting control subject may be actively recognized by the camera. The specific process includes: acquiring video stream data collected by the camera for the target object; determining the type of the target object to be photographed according to the video stream data; determining the type of the target shooting control subject according to the type of the target object and a preset object-subject mapping relationship; the preset object-subject mapping relationship indicates a mapping relationship between photographing object types and shooting control subject types. After the camera is turned on, it captures images through the lens, and can collect imaging information. The multiple frames of images collected over a continuous period of time constitute the video stream data collected by the camera. When the target object is to be photographed, the image of the video stream collected by the camera typically includes the target object. Then, by recognizing the images in the video stream, the type of the target object can be determined. For example, it can be determined that the type of the target object is a person, an animal, a vehicle, or another item. Depending on the type of the target object, the corresponding type of the target shooting control subject is naturally different. The camera may pre-store the object-subject mapping relationship, i.e., the mapping relationship between photographing object types and shooting control subject types, and then query the mapping relationship according to the currently detected type of the target object, thereby determining the type of the target shooting control subject. Exemplarily, when it is detected that the type of the target object is a person, it may be determined that the type of the target shooting control subject is a gesture, a body pose, or a facial expression. When it is detected that the type of the target object is an animal, it may be determined that the target shooting control subject is an animal engraved plate, an identifier worn by the animal, or a specific action made by the animal. When it is detected that the type of the target object is a vehicle, it may be determined that the type of the target shooting control subject is a license plate, a car logo, etc.

Step 120: Acquire imaging information of the target shooting control subject, and generate a shooting control signal according to the imaging information and the type of the target shooting control subject.

Specifically, the imaging information of the target shooting control subject is obtained by acquiring image data of the target object through the camera lens, such as the aforementioned video stream data. This imaging information is mainly used to identify what exactly the target shooting control subject is, such as what specific gesture it is, what facial expression it is, the specific characters of a license plate number, etc. Generating the shooting control signal according to the imaging information and the type of the target shooting control subject means recognizing, based on the imaging information, the specific content of the target shooting control subject and whether it is the subject content that triggers the photographing operation corresponding to the type of the target shooting control subject. If so, the shooting control signal is generated, and this signal can control the camera to perform the photographing operation. For example, if the type of the target shooting control subject is a gesture, then the gesture that triggers the photographing operation may be a "V" shaped gesture. Whether the target shooting control subject is a "V" shaped gesture is recognized based on the imaging information. If so, the shooting control signal is generated.

Step 130: Execute a corresponding photographing operation on the target object according to the shooting control signal.

Specifically, after the shooting control signal is generated, the camera executes the shooting control signal, and can then perform the photographing operation on the target object. In this way, the user does not have to hold the camera and press the shutter button to take a photo. The user can place the camera in a certain position and then realize automatic photographing through gestures, body poses, facial expressions, etc., and can also perform conditional automatic photographing of other animals, vehicles, or items, greatly expanding the application scenarios of the camera and improving the user experience.

In the technical solutions provided in the embodiments of this disclosure, first, a type of a target shooting control subject that has an associated relationship with a target object to be photographed is determined, where the target shooting control subject is used to control a photographing operation of a camera. Then, imaging information of the target shooting control subject is acquired, and a shooting control signal is generated according to the imaging information and the type of the target shooting control subject. Finally, a corresponding photographing operation is executed on the target object according to the shooting control signal. Thus, the camera can realize automatic photographing based on the target object to be photographed and the target shooting control subject, without requiring the user to manually operate the camera to shoot, thereby allowing the user to use the camera for photographing in more scenarios, expanding the usage scenarios of the camera, and improving the user experience.

Fig. 2 schematically shows a flowchart of a photographing method provided by one embodiment of this disclosure. This embodiment is a further refinement of the foregoing embodiments. As shown in Fig. 2, the photographing method provided by this embodiment includes the following steps:
Step 210: Determine a type of a target shooting control subject that has an associated relationship with a target object to be photographed, where the target shooting control subject is used to control a photographing operation of a camera.

Step 220: Acquire imaging information of the target shooting control subject.

Steps 210 to 220 are the same as the corresponding contents in steps 110 to 120 in the previous embodiments, and will not be repeated here.

Step 230: Determine a corresponding subject recognition algorithm according to the type of the target shooting control subject. The subject recognition algorithm at least includes a gesture recognition algorithm, a face recognition algorithm, and a marker recognition algorithm.

Specifically, the subject recognition algorithm is used to recognize the specific content of the target shooting control subject. Therefore, different types of target shooting control subjects correspond to different subject recognition algorithms, so it is necessary to determine the corresponding subject recognition algorithm according to the type of the target shooting control subject. In this embodiment, the subject recognition algorithm at least includes one of a gesture recognition algorithm, a face recognition algorithm, and a marker recognition algorithm, or any combination thereof. The gesture recognition algorithm is used to recognize what specific gesture the target shooting control subject performed by the target object is. For example, the gesture recognition algorithm is used to recognize whether the target object performed a "V" shaped gesture or a "√" shaped gesture (the gesture made by opening the thumb and index finger). Alternatively, the gesture recognition algorithm is used to recognize whether the target shooting control subject is the shooting control subject that triggers the photographing operation. For example, if the shooting control subject that triggers the photographing operation is a "V" shaped gesture, then the gesture recognition algorithm is used to recognize whether the target object performed a "V" shaped gesture. The face recognition algorithm is used to recognize the facial expression of the target object. For example, the face recognition algorithm is used to recognize whether the target object made a smiling expression. The marker recognition algorithm is used to recognize the content of a marker, such as the content of an animal engraved plate, a license plate, a car logo, etc. By associating the subject recognition algorithm with the type of the target shooting control subject, a more accurate algorithm can be used to recognize the target shooting control subject. For example, if it is determined that the type of the target shooting control subject is a gesture, the gesture recognition algorithm is used instead of the face recognition algorithm or the marker recognition algorithm, thereby obtaining more accurate recognition information of the target shooting control subject.

Step 240: When the subject recognition algorithm recognizes that the target shooting control subject in the imaging information is a designated shooting control subject, generate the shooting control signal.

Specifically, the designated shooting control subject is the shooting control subject that triggers the photographing operation. When it is recognized that the target shooting control subject in the imaging information is the designated shooting control subject, it means that the photographing operation can be performed, and thus the shooting control signal is generated.

In one embodiment of this disclosure, the specific process of recognizing the target shooting control subject through the subject recognition algorithm is: using the subject recognition algorithm to recognize a designated area in the imaging information to determine the target shooting control subject included in the imaging information. A distance between a boundary of the designated area and an image contour of the target object is less than a first preset distance, or a distance between the boundary of the designated area and a contour of a specified part of the target object is less than a second preset distance. For example, the designated area is an area within or near the image contour of the target object, or an area within or near the contour of a specific part of the target object, such as a gesture within or near the human body contour, a license plate within the vehicle image contour area or in the front or rear area of the vehicle, a "splayed thumb-and-index-finger gesture" near the face, etc.

Further, in another embodiment of this disclosure, face recognition may be performed on the target object to be photographed first, and the facial feature information may be recorded or temporarily stored. The facial feature information can be used to distinguish different people. Face recognition is combined with the recognition of the target shooting control subject to generate the shooting control signal. Specifically, facial feature information is extracted and recorded for each face within the framing range of the camera. Then, when a shooting control gesture is recognized, it is determined whether the control gesture is close to the area where any previously recorded facial feature information is located. If it is close, the control gesture is determined to be valid. Otherwise, the control gesture is determined to be invalid, and the camera's shooting is not controlled until a valid shooting control gesture is recognized. In the case of taking a photo of multiple people in a public place, since there are other "unrelated persons" in the venue besides the target photographing object, the combination of gesture and face recognition can eliminate interference control from unrelated persons on the camera.

In one embodiment of this disclosure, the type of the target shooting control subject is a gesture. In this case, the shooting control signal may be generated by performing single gesture recognition, multiple gesture recognition, static gesture recognition, dynamic gesture recognition, and custom gesture recognition based on the imaging information. Single gesture recognition refers to recognizing only one gesture motion. Multiple gesture recognition refers to recognizing two or more gesture motions. Static gesture recognition refers to gesture motions that do not need to change within a short period of time, such as the "OK" gesture, heart gesture, splayed thumb-and-index-finger gesture, etc. In this case, recognition may be performed in combination with the position of the target object's face, such as an splayed thumb-and-index-finger gesture close to the face. Dynamic gesture recognition refers to recognizing multiple gesture motions within a short period of time. Custom gesture recognition means that the user pre-defines a gesture motion, and then recognition is performed. For example, a physically disabled person may pre-define an unconventional gesture motion, and then generate a shooting control signal through custom gesture recognition when photographing.

Taking dynamic gesture recognition that requires recognizing two gesture motions as an example, the process of generating the shooting control signal includes: detecting a first gesture motion performed by the target object according to the imaging information. When it is detected that the target object performs a second gesture motion within a preset time duration after the first gesture motion is detected, the shooting control signal is generated. Specifically, first, whether the target object has performed a first gesture motion is detected based on the imaging information. If the target object has performed the first gesture motion, then it is further detected whether the target object has performed a second gesture motion within the preset time duration. If so, the shooting control signal may be generated. If any of the foregoing conditions is not satisfied, the shooting control signal is not generated. Exemplarily, if the user first performs a "V" shaped gesture and then performs a "√" shaped gesture within 2 seconds, the shooting control signal is generated. Otherwise, the shooting control signal is not generated. For another example, if the user changes from a thumb-up gesture to a thumb-down gesture within 1 second, the shooting control signal is generated.

In one embodiment of this disclosure, when there are multiple target objects, each target object may have a corresponding target shooting control subject. In this case, the process of generating the shooting control signal includes: recognizing multiple target shooting control subjects according to the imaging information and the type of the target shooting control subject; calculating a ratio between the number of control subjects and the number of target objects; when the ratio is greater than a preset threshold, generating the shooting control signal. For example, the type of the target shooting control subject is a gesture, and the gesture-to-heads proportion is calculated. When the proportion exceeds a preset threshold (e.g., 50%), the shooting control signal is generated.

Step 250: After executing a focusing operation on the target object according to a focusing instruction, execute a corresponding photographing operation on the target object according to a shooting instruction.

Specifically, the shooting control signal includes a focusing instruction and a shooting instruction. The focusing instruction is used to control the camera to focus on the target object, and the shooting instruction is used to control the camera to execute the photographing operation. Then, when the camera is taking a photo, it first focuses on the target object according to the focusing instruction, and then executes the shooting instruction, i.e., performs the photographing operation, to achieve clear photographing of the target object. Focusing may be performed on a partial area of the target object or on the entire target object. For example, focusing may be performed on the face of the target object, on the whole body of the target object, or in combination with a marker, focusing on the whole body or face of a person having a certain marker, or on the marker itself.

In one embodiment of this disclosure, there are multiple target objects. In this case, the focusing and shooting operations may be performed as follows: according to the generation time of the shooting control signal corresponding to each target object, sequentially focus on each target object and then execute the photographing operation. Specifically, the generation time of the shooting control signal corresponding to a target object actually reflects the execution time of the target shooting control subject corresponding to the target object, such as the execution time of the target object's gesture. In this case, according to the chronological order of the execution times of the gestures of the target objects, each target object can be focused on and then photographed in sequence, i.e., focusing and photographing are performed for each target object according to the order of the gestures.

In one embodiment of this disclosure, there are multiple target objects. In this case, the focusing and shooting operations may be performed as follows: after focusing on each target object separately, execute a photographing operation on the multiple target objects as a whole. That is, focusing is directed to the multiple target objects, while shooting is directed to the multiple target objects as a whole.

In one embodiment of this disclosure, during the photographing process, if a stop shooting gesture is detected, the camera is controlled to stop shooting. Optionally, during the photographing process, if it is detected that other objects in the background environment perform a corresponding target shooting control subject, the camera is controlled to stop shooting to eliminate interference from people in the environment. For example, when a target object is photographing in a park, if other people in the background environment perform related gestures to interfere with the shooting, the camera is controlled to stop shooting. Alternatively, during the photographing process, if the target object makes a gesture that is different from the shooting gesture and is pre-defined as a stop shooting gesture, the camera is controlled to stop shooting. For example, when recording a group video, if some people participating in the shooting need to join the ongoing shooting because they are late, any person in the frame makes a stop shooting gesture, then the current video recording is ended. After the latecomers are in place, the recording of a new video or the taking of a photo is started through gesture control.

In one embodiment of this disclosure, the camera can realize automatic tracking and shooting. That is, when it is detected that the target object moves, a lens movement instruction is generated according to the movement path of the target object; the lens of the camera is controlled to move according to the lens movement instruction, so that the target object remains within the framing range of the camera during the photographing process. Specifically, during the movement of the target object, the camera lens can move synchronously with the target object, so that the target object remains within the framing range of the camera, thereby allowing the target object to be photographed continuously. Exemplarily, when the target object moves from the left side to the right side, the camera lens can follow the target object from the left side to the right side, achieving target dynamic locking. This process can realize face tracking and shooting, tracking and marker shooting of animals/plants/items, specific person tracking and shooting, vehicle license plate tracking and shooting, etc.

In this disclosure, unless otherwise specified, the shooting control signal specifically refers to a control signal that controls the camera to perform a shooting action, such as starting photo taking, starting video recording, etc.

The technical solutions provided by the embodiments of this disclosure can achieve object recognition/tracking, autofocus, automatic photographing, and other functions, greatly enriching the usage methods and scenarios of the camera, enabling the camera to better meet the usage needs of users, thereby improving the user experience.

It should be noted that although the steps of the method of this disclosure are described in a specific order in the drawings, this does not require or imply that these steps must be executed in that specific order, or that all shown steps must be executed to achieve the desired results. Additionally or alternatively, certain steps may be omitted, multiple steps may be combined into one step for execution, and/or one step may be decomposed into multiple steps for execution, etc.

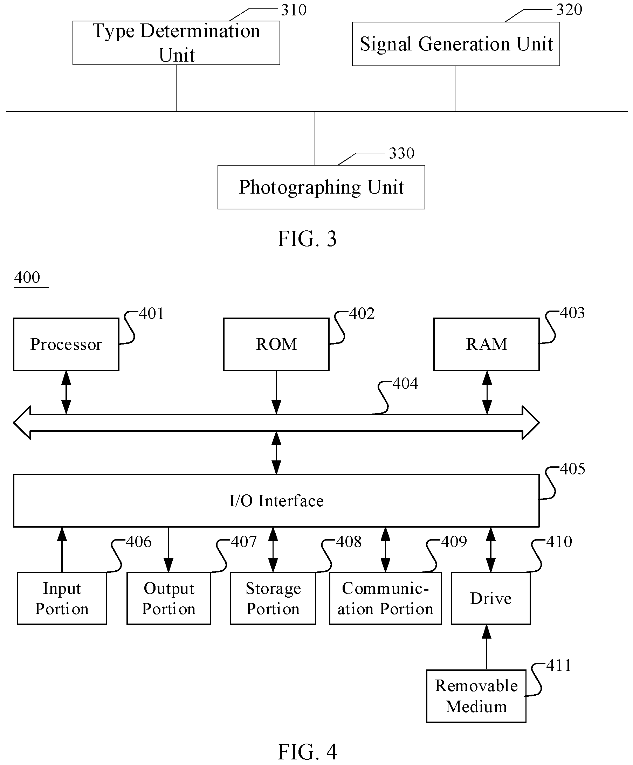

The following describes the apparatus embodiments of this disclosure, which can be used to execute the photographing method in the above embodiments of this disclosure. Fig. 3 schematically shows a block diagram of a photographing apparatus provided by an embodiment of this disclosure. As shown in Fig. 3, the photographing apparatus provided by an embodiment of this disclosure includes:
a type determination unit 310 configured to determine a type of a target shooting control subject that has an associated relationship with a target object to be photographed, where the target shooting control subject is used to control a photographing operation of a camera;
a signal generation unit 320 configured to acquire imaging information of the target shooting control subject, and generate a shooting control signal based on the imaging information and the type of the target shooting control subject;
a photographing unit 330 configured to control the camera to execute a photographing operation according to the target shooting control subject and the target object.

In one embodiment of this disclosure, the type determination unit 310 is specifically configured to:
acquire video stream data collected by the camera for the target object;
determine a type of the target object to be photographed according to the video stream data;
determine the type of the target shooting control subject according to the type of the target object and a preset object-subject mapping relationship; the preset object-subject mapping relationship indicates a mapping relationship between photographing object types and shooting control subject types.

In one embodiment of this disclosure, the type determination unit 310 is specifically configured to:
determine the type of the target shooting control subject that has an associated relationship with the target object to be photographed according to a photographing mode selected by a user; the photographing mode at least includes a single-gesture photographing mode, a multi-gesture photographing mode, a dynamic gesture photographing mode, a predefined gesture photographing mode, a marker tracking and photographing mode, and a face recognition and tracking photographing mode.

In one embodiment of this disclosure, the type determination unit 310 is specifically configured to:
acquire face image data within a framing range of the camera;
perform facial feature extraction on the face image data to obtain facial feature information to be recognized;
if the facial feature information to be recognized is consistent with pre-stored facial feature information, then take the object corresponding to the facial feature information to be recognized as the target object, and determine the type of the target shooting control subject that has an associated relationship with the target object.

In one embodiment of this disclosure, the signal generation unit 320 is specifically configured to:
determine a corresponding subject recognition algorithm according to the type of the target shooting control subject; the subject recognition algorithm at least includes one of a gesture recognition algorithm, a face recognition algorithm, and a marker recognition algorithm, or any combination thereof;
when the subject recognition algorithm recognizes that the target shooting control subject in the imaging information is a designated shooting control subject, generate the shooting control signal.

In one embodiment of this disclosure, the signal generation unit 320 is specifically configured to:
use the subject recognition algorithm to recognize a designated area in the imaging information to determine the target shooting control subject included in the imaging information; where a distance between a boundary of the designated area and an image contour of the target object is less than a first preset distance, or a distance between the boundary of the designated area and a contour of a specified part of the target object is less than a second preset distance.

In one embodiment of this disclosure, the type of the target shooting control subject is a gesture. The type determination unit 310 is specifically configured to:
perform face recognition on the target object to record an area where a face of the target object is located;
when the target shooting control subject is recognized according to the imaging information, detect a distance between a position of the target shooting control subject and the area where the face is located;
when the distance is within a preset range, generate the shooting control signal.

In one embodiment of this disclosure, the type of the target shooting control subject is a marker. The type determination unit 310 is specifically configured to:
when the target shooting control subject is detected according to the imaging information, establish a wireless connection with a wireless signal transmitter of the target shooting control subject;
acquire, via the wireless connection, the shooting control signal sent by the target shooting control subject.

In one embodiment of this disclosure, the type of the target shooting control subject is a gesture. The signal generation unit 320 is specifically configured to:
detect a first gesture motion performed by the target object according to the imaging information;
when it is detected that the target object performs a second gesture motion within a preset time duration after the first gesture motion is detected, generate the shooting control signal.

In one embodiment of this disclosure, there are multiple target objects. The signal generation unit 320 is specifically configured to:
recognize multiple target shooting control subjects according to the imaging information and the type of the target shooting control subject;
calculate a ratio between the number of control subjects and the number of target objects;
when the ratio is greater than a preset threshold, generate the shooting control signal.

In one embodiment of this disclosure, the shooting control signal includes a focusing instruction and a shooting instruction. The photographing unit 330 is specifically configured to:
after executing a focusing operation on the target object according to the focusing instruction, execute a corresponding photographing operation on the target object according to the shooting instruction.

In one embodiment of this disclosure, there are multiple target objects. The photographing unit 330 is specifically configured to:
according to the generation time of the shooting control signal corresponding to each target object, sequentially focus on each target object and then execute the photographing operation; or
after focusing on each target object separately, execute a photographing operation on the multiple target objects as a whole.

In one embodiment of this disclosure, the photographing unit 330 is further configured to:
when a stop shooting gesture is detected, control the camera to stop shooting.

In one embodiment of this disclosure, the photographing unit 330 is further configured to:
when it is detected that the target object moves, generate a lens movement instruction according to a movement path of the target object;
control the lens of the camera to move according to the lens movement instruction, so that the target object remains within a framing range of the camera during the photographing process.

The specific details of the photographing apparatus provided in the embodiments of this disclosure have been described in detail in the corresponding method embodiments, and will not be repeated here.

Fig. 4 schematically shows a block diagram of a computer system for implementing an electronic device according to an embodiment of this disclosure.

It should be noted that the computer system 400 of the electronic device shown in Fig. 4 is only an example, and should not impose any limitation on the functions and scope of use of the embodiments of this disclosure.

As shown in Fig. 4, the computer system 400 includes a central processing unit (CPU) 401, which can execute various appropriate actions and processes according to a program stored in a read-only memory (ROM) 402 or a program loaded from a storage portion 408 into a random access memory (RAM) 403. The random access memory 403 also stores various programs and data required for system operation. The central processing unit 401, the read-only memory 402, and the random access memory 403 are connected to each other via a bus 404. An input/output interface (I/O interface) 405 is also connected to the bus 404.

The following components are connected to the input/output interface 405: an input portion 406 including a keyboard, a mouse, etc.; an output portion 407 including a cathode ray tube (CRT), a liquid crystal display (LCD), etc., and a speaker, etc.; a storage portion 408 including a hard disk, etc.; and a communication portion 409 including a network interface card such as a LAN card, a modem, etc. The communication portion 409 performs communication processing via a network such as the Internet. A drive 410 is also connected to the input/output interface 405 as needed. A removable medium 411, such as a magnetic disk, an optical disk, a magneto-optical disk, a semiconductor memory, etc., is mounted on the drive 410 as needed, so that a computer program read therefrom is installed into the storage portion 408 as needed.

In particular, according to the embodiments of this disclosure, the processes described in the various method flowcharts may be implemented as computer software programs. For example, an embodiment of this disclosure includes a computer program product, which includes a computer program carried on a computer-readable medium, the computer program containing program code for executing the methods shown in the flowcharts. In such an embodiment, the computer program may be downloaded and installed from a network via the communication portion 409, and/or installed from the removable medium 411. When the computer program is executed by the central processing unit 401, various functions defined in the system of this disclosure are performed.

It should be noted that the computer-readable medium shown in the embodiments of this disclosure may be a computer-readable signal medium or a computer-readable storage medium, or any combination of the two. A computer-readable storage medium may be, for example, but not limited to, an electrical, magnetic, optical, electromagnetic, infrared, or semiconductor system, apparatus, or device, or any combination of the above. More specific examples of computer-readable storage media may include, but are not limited to: an electrical connection having one or more wires, a portable computer disk, a hard disk, a random access memory (RAM), a read-only memory (ROM), an erasable programmable read-only memory (EPROM), a flash memory, an optical fiber, a portable compact disc read-only memory (CD-ROM), an optical storage device, a magnetic storage device, or any suitable combination of the above. In this disclosure, a computer-readable storage medium may be any tangible medium that contains or stores a program that can be used by or in conjunction with an instruction execution system, apparatus, or device. In this disclosure, a computer-readable signal medium may include a data signal propagated in baseband or as part of a carrier wave, carrying computer-readable program code therein. Such a propagated data signal may take various forms, including but not limited to an electromagnetic signal, an optical signal, or any suitable combination of the above. A computer-readable signal medium may also be any computer-readable medium other than a computer-readable storage medium, which can send, propagate, or transmit a program for use by or in conjunction with an instruction execution system, apparatus, or device. The program code contained on the computer-readable medium may be transmitted using any appropriate medium, including but not limited to: wireless, wired, etc., or any suitable combination of the above.

The flowcharts and block diagrams in the drawings illustrate the architecture, functions, and operations of possible implementations of systems, methods, and computer program products according to various embodiments of this disclosure. In this regard, each block in the flowcharts or block diagrams may represent a module, a program segment, or a portion of code, which comprises one or more executable instructions for implementing the specified logical function. It should also be noted that in some alternative implementations, the functions noted in the blocks may occur in an order different from that noted in the drawings. For example, two blocks shown in succession may, in fact, be executed substantially concurrently, or they may sometimes be executed in the reverse order, depending upon the functionality involved. It will also be noted that each block in the block diagrams or flowcharts, and combinations of blocks in the block diagrams or flowcharts, may be implemented by a dedicated hardware-based system that performs the specified functions or operations, or may be implemented by a combination of dedicated hardware and computer instructions.

It should be noted that although several modules or units of a device for performing actions are mentioned in the above detailed description, this division is not mandatory. In practice, according to the embodiments of this disclosure, the features and functions of two or more modules or units described above may be embodied in one module or unit. Conversely, the features and functions of one module or unit described above may be further divided into and embodied by multiple modules or units.

Through the description of the above embodiments, those skilled in the art can easily understand that the example embodiments described herein may be implemented by software, or by software combined with necessary hardware. Therefore, the technical solutions according to the embodiments of this disclosure may be embodied in the form of a software product, which may be stored in a non-volatile storage medium (which may be a CD-ROM, a USB flash drive, a mobile hard disk, etc.) or on a network, and includes several instructions for causing a computing device (which may be a personal computer, a server, a touch terminal, or a network device, etc.) to execute the methods according to the embodiments of this disclosure.

Those skilled in the art will readily appreciate other embodiments of this disclosure after considering the specification and practicing the invention disclosed herein. This disclosure is intended to cover any variations, uses, or adaptations of this disclosure that follow the general principles of this disclosure and include common general knowledge or conventional technical means in the technical field that are not disclosed in this disclosure.

It should be understood that this disclosure is not limited to the precise structures described above and shown in the drawings, and various modifications and changes may be made without departing from the scope thereof. The scope of this disclosure is limited only by the appended claims.

## Claims

1. A photographing method, comprising:
determining a type of a target shooting control subject that has an associated relationship with a target object to be photographed, wherein the target shooting control subject is configured to control a photographing operation of a camera;
acquiring imaging information of the target shooting control subject, and generating a shooting control signal based on the imaging information and the type of the target shooting control subject;
performing a corresponding photographing operation on the target object according to the shooting control signal.

2. The photographing method as recited in claim 1, wherein determining the type of the target shooting control subject that has an associated relationship with the target object to be photographed comprises:
acquiring video stream data collected by the camera for the target object;
determining a type of the target object to be photographed according to the video stream data;
determining the type of the target shooting control subject based on the type of the target object and a preset object-subject mapping relationship;
wherein the preset object-subject mapping relationship indicates a mapping relationship between photographing object types and shooting control subject types.

3. The photographing method as recited in claim 1, wherein determining the type of the target shooting control subject that has an associated relationship with the target object to be photographed comprises:
determining the type of the target shooting control subject that has an associated relationship with the target object to be photographed according to a photographing mode selected by a user;
wherein the photographing mode at least comprises a single-gesture photographing mode, a multi-gesture photographing mode, a dynamic gesture photographing mode, a predefined gesture photographing mode, a marker tracking and photographing mode, and a face recognition and tracking photographing mode.

4. The photographing method as recited in claim 1, wherein determining the type of the target shooting control subject that has an associated relationship with the target object to be photographed comprises:
acquiring face image data within a framing range of the camera;
performing facial feature extraction on the face image data to obtain facial feature information to be recognized;
in response to determining that the facial feature information to be recognized is consistent with pre-stored facial feature information, taking the object corresponding to the facial feature information to be recognized as the target object, and determining the type of the target shooting control subject that has an associated relationship with the target object.

5. The photographing method as recited in claim 1, wherein generating the shooting control signal according to the imaging information and the type of the target shooting control subject comprises:
determining a corresponding subject recognition algorithm according to the type of the target shooting control subject;
wherein the subject recognition algorithm at least comprises at least one selected from the group consisting of a gesture recognition algorithm, a face recognition algorithm, and a marker recognition algorithm;
in response to the subject recognition algorithm recognizing that the target shooting control subject in the imaging information is a designated shooting control subject, generating the shooting control signal.

6. The photographing method as recited in claim 5, further comprising the following operation subsequent to determining the corresponding subject recognition algorithm according to the type of the target shooting control subject:
using the subject recognition algorithm to recognize a designated area in the imaging information to determine the target shooting control subject included in the imaging information;
wherein a distance between a boundary of the designated area and an image contour of the target object is less than a first preset distance, or a distance between the boundary of the designated area and a contour of a specified part of the target object is less than a second preset distance.

7. The photographing method as recited in claim 1, wherein the type of the target shooting control subject is a gesture, and generating the shooting control signal according to the imaging information and the type of the target shooting control subject comprises:
performing face recognition on the target object to record an area where a face of the target object is located; in response to recognizing the target shooting control subject according to the imaging information, detecting a distance between a position of the target shooting control subject and the area where the face is located; in response to detecting that the distance is within a preset range, generating the shooting control signal.

8. The photographing method as recited in claim 1, wherein the type of the target shooting control subject is a marker, and generating the shooting control signal according to the imaging information and the type of the target shooting control subject comprises:
in response to detecting the target shooting control subject according to the imaging information, establishing a wireless connection with a wireless signal transmission module of the target shooting control subject; and
acquiring, via the wireless connection, the shooting control signal sent by the target shooting control subject.

9. The photographing method as recited in claim 1, wherein the type of the target shooting control subject is a gesture, and generating the shooting control signal according to the imaging information and the type of the target shooting control subject comprises:
detecting a first gesture motion performed by the target object according to the imaging information; and
in response to detecting that the target object performs a second gesture motion within a preset time duration after the first gesture motion is detected, generating the shooting control signal.

10. The photographing method as recited in claim 1, wherein there are a plurality of target objects, and generating the shooting control signal according to the imaging information and the type of the target shooting control subject comprises:
recognizing a plurality of target shooting control subjects according to the imaging information and the type of the target shooting control subject;
calculating a ratio between a number of the target shooting control subjects and a number of target objects;
in response to determining that the ratio is greater than a preset threshold, generating the shooting control signal.

11. The photographing method as recited in claim 1, wherein the shooting control signal comprises a focusing instruction and a shooting instruction, and performing the corresponding photographing operation on the target object according to the shooting control signal comprises:
after executing a focusing operation on the target object according to the focusing instruction, executing a corresponding photographing operation on the target object according to the shooting instruction.

12. The photographing method as recited in claim 1, wherein there are a plurality of target objects, and performing the corresponding photographing operation on the target objects according to the shooting control signal comprises:
according to a generation time of the shooting control signal corresponding to each target object, sequentially focusing on each target object and then performing the photographing operation; or
after focusing on each target object separately, executing a photographing operation on the multiple target objects as a whole.

13. The photographing method as recited in claim 1, wherein during the process of executing the corresponding photographing operation on the target object according to the shooting control signal, the method further comprises:
in response to detecting a stop shooting gesture, controlling the camera to stop shooting.

14. The photographing method as recited in claim 1, wherein during the process of executing the corresponding photographing operation on the target object according to the shooting control signal, the method further comprises:
in response to detecting that the target object moves, generating a lens movement instruction according to a movement path of the target object;
controlling the lens of the camera to move according to the lens movement instruction, so that the target object remains within a framing range of the camera during the photographing process.

15. A photographing apparatus, comprising:
a type determination unit
configured to determine a type of a target shooting control subject that has an associated relationship with a target object to be photographed, wherein the target shooting control subject is configured to control a photographing operation of a camera;
a signal generation unit configured to acquire imaging information of the target shooting control subject, and generate a shooting control signal according to the imaging information and the type of the target shooting control subject;
a photographing unit configured to control the camera to execute a photographing operation according to the target shooting control subject and the target object.

16. A computer-readable medium having a computer program stored thereon, wherein the computer program, when executed by a processor, implements the photographing method as recited in any one of claims 1-14.

17. An electronic device, comprising:
a memory configured to store executable instructions of the processor;
wherein the processor is configured to execute the executable instructions to cause the electronic device to implement the photographing method as recited in any one of claims 1-14.

18. A computer program product, the computer program product or computer program comprising computer instructions stored in a computer-readable storage medium;
a processor of a computer device is configured to read the computer instructions from the computer-readable storage medium, and the processor is configured to execute the computer instructions, causing the computer device to execute the photographing method as
recited in any one of claims 1-14.
